# EUROPEAN PATENT APPLICATION

(11) **EP 4 340 468 A1**
(43) Date of publication of application: **20.03.2024**
(21) Application number: 23196739.9
(22) Date of filing: 12.09.2023
(51) Int. Cl.: H04W 52/24, H04B 1/3827, H04M 1/02

(54) **APPARATUSES AND METHODS FOR NOISE MITIGATION**

(30) Priority: 15.09.2022 US 202263407016 P; 12.12.2022 US 202218079531
(71) Applicant: Apple Inc., Cupertino, CA 95014 (US)
(72) Inventor: KAROL, David A, Cupertino, 95014 (US); LUAN, Austin J, Cupertino, 95014 (US); OUNG, Ayewin, Cupertino, 95014 (US); MORIZIO, Daniel J, Cupertino, 95014 (US); BREGMAN, Jeremy L, Cupertino, 95014 (US); Gordoni, Sean M, Cupertino, 95014 (US); RAMAMURTHI, Vijay Kumar, Cupertino, 95014 (US); REN, Wei, Cupertino, 95014 (US)
(74) Representative: COPA Copenhagen Patents

(57) **Abstract**

Embodiments disclosed herein determine when a sensor of an electronic device is being used, determine if a transmitter of the electronic device is transmitting a signal, determine whether the signal has a frequency in the certain frequency bands (e.g., that cause noise at the sensor), and reduce power (e.g., perform a power back-off operation) at the transmitter if so.

## Description

### CROSS-REFERENCE TO RELATED APPLICATIONS

This application claims priority to U.S. Provisional Application No. 63/407,016, filed September 15, 2022, entitled "APPARATUSES AND METHODS FOR NOISE MITIGATION," the disclosure of which is incorporated by reference herein in its entirety for all purposes.

### BACKGROUND

The present disclosure relates generally to improving signal quality, and more specifically to reducing noise in signals.

When transmitting wireless signals on certain radio frequency bands, the signals may couple to a sensor. The signals may manifest noise at the sensor, and thus be captured as noise by the sensor. For example, the sensor may include a camera sensor, and a transmission signal may be captured as row noise in an image captured by the camera sensor.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, an electronic device includes an antenna, a transmitter coupled to the antenna that transmits a radio frequency signal via the antenna, a camera that captures an image, and processing circuitry coupled to the transmitter and the camera. The processing circuitry reduces transmission power to the transmitter based on the camera capturing the image.

In another embodiment, a method includes receiving, at processing circuitry of an electronic device, an indication that a sensor of the electronic device is being used, and reducing the transmission power based on the indication.

In yet another embodiment, one or more tangible, non-transitory, computer-readable media stores instructions that cause one or more processors to receive a first indication that a sensor is being used for facial identification, receive a second indication that a transmitter is transmitting a signal at a transmission power, and reduce the transmission power based on the first indication and the second indication.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

Various aspects of this disclosure may be better understood upon reading the following detailed description and upon reference to the drawings described below in which like numerals refer to like parts.
FIG. 1 is a block diagram of an electronic device, according to embodiments of the present disclosure;
FIG. 2 is a functional diagram of the electronic device of FIG. 1, according to embodiments of the present disclosure;
FIG. 3 is a schematic diagram illustrating a modulated signal emitted from an antenna of the electronic device of FIG. 1 coupling to facial identification circuitry;
FIG. 4 is a schematic diagram illustrating how noise is injected into a camera of the electronic device of FIG. 1 from the facial identification circuitry of FIG. 3;
FIG. 5 is a table of noise injection areas and results;
FIG. 6 is a schematic diagram illustrating how noise is injected into the camera of the electronic device of FIG. 1;
FIG. 7 illustrates unstructured pixel noise that may serve as a baseline;
FIG. 8 is an example table of frequency bands that, for signals having frequencies in those bands, cause noise at a camera;
FIG. 9 is a frequency diagram illustrating ratio of pixel temporal noise to row temporal noise in a frame set (RnR) scores over frequency;
FIG. 10 is a software block diagram of software executing on the electronic device of FIG. 1 that performs noise mitigation, according to embodiments of the present disclosure; and
FIG. 11 is a flowchart of a method for reducing noise cause by signal transmission when performing facial identification, according to embodiments of the present disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. Furthermore, the particular features, structures, or characteristics may be combined in any suitable manner in one or more embodiments. Use of the terms "approximately," "near," "about," "close to," and/or "substantially" should be understood to mean including close to a target (e.g., design, value, amount), such as within a margin of any suitable or contemplatable error (e.g., within 0.1 % of a target, within 1% of a target, within 5% of a target, within 10% of a target, within 25% of a target, and so on). Moreover, it should be understood that any exact values, numbers, measurements, and so on, provided herein, are contemplated to include approximations (e.g., within a margin of suitable or contemplatable error) of the exact values, numbers, measurements, and so on. Additionally, the term "set" may include one or more. That is, a set may include a unitary set of one member, but the set may also include a set of multiple members.

This disclosure is directed to improving signal quality, and more specifically to reducing noise in signals. When transmitting wireless signals on certain radio frequency bands, the signals may couple to a sensor. The signals may manifest noise at the sensor, and thus be captured as noise by the sensor. For example, the sensor may include a camera sensor, and a transmission signal may be captured as row noise in an image captured by the camera sensor.

Embodiments herein provide various apparatuses and techniques to improve signal quality (e.g., for signals captured by the sensor) by reducing noise. As the noise may be caused by transmission signals having frequencies in certain frequency bands, noise in the sensor signals may be reduced by reducing power of the transmission signals (e.g., reducing power to a transmitter transmitting the signals). To do so, the embodiments disclosed herein may determine when the sensor (e.g., the camera sensor) is being used, determine if the transmitter is transmitting a signal, determine whether the signal has a frequency in the certain frequency bands (e.g., that cause noise at the sensor), and reduce power (e.g., perform a power back-off operation) at the transmitter if so. In this way, the disclosed embodiments may reduce noise at the sensor. It should be understood that even though the sensor discussed in the disclosed embodiments includes a camera sensor, and the noise discussed in the disclosed embodiments is caused by transmission signals, the embodiments may also or alternatively be applied to other victims of noise (e.g., other sensors, components, or devices) and other sources of noise (e.g., operation of other components or devices).

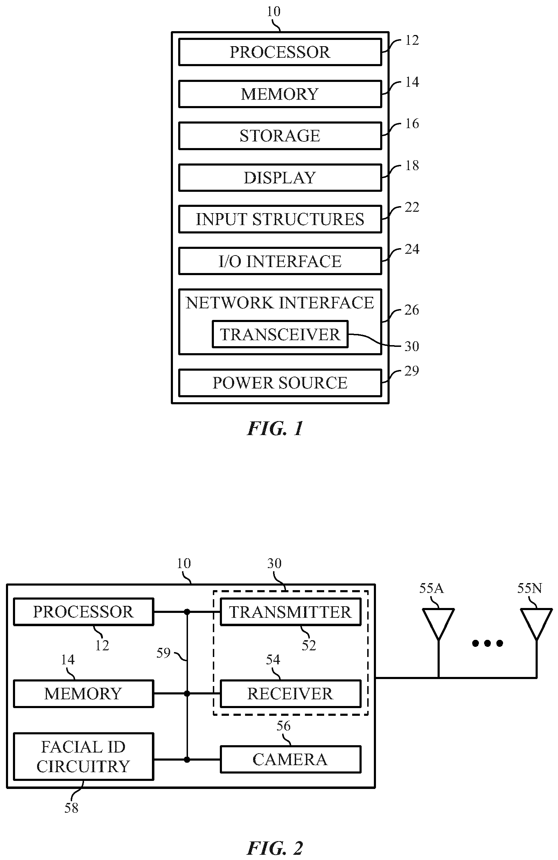

FIG. 1 is a block diagram of an electronic device 10, according to embodiments of the present disclosure. The electronic device 10 may include, among other things, one or more processors 12 (collectively referred to herein as a single processor for convenience, which may be implemented in any suitable form of processing circuitry), memory 14, nonvolatile storage 16, a display 18, input structures 22, an input/output (I/O) interface 24, a network interface 26, and a power source 29. The various functional blocks shown in FIG. 1 may include hardware elements (including circuitry), software elements (including machine-executable instructions) or a combination of both hardware and software elements (which may be referred to as logic). The processor 12, memory 14, the nonvolatile storage 16, the display 18, the input structures 22, the input/output (I/O) interface 24, the network interface 26, and/or the power source 29 may each be communicatively coupled directly or indirectly (e.g., through or via another component, a communication bus, a network) to one another to transmit and/or receive signals between one another. It should be noted that FIG. 1 is merely one example of a particular implementation and is intended to illustrate the types of components that may be present in the electronic device 10.

By way of example, the electronic device 10 may include any suitable computing device, including a desktop or notebook computer (e.g., in the form of a MacBook^{®}, MacBook^{®} Pro, MacBook Air^{®}, iMac^{®}, Mac^{®} mini, or Mac Pro^{®} available from Apple Inc. of Cupertino, California), a portable electronic or handheld electronic device such as a wireless electronic device or smartphone (e.g., in the form of a model of an iPhone^{®} available from Apple Inc. of Cupertino, California), a tablet (e.g., in the form of a model of an iPad^{®} available from Apple Inc. of Cupertino, California), a wearable electronic device (e.g., in the form of an Apple Watch^{®} by Apple Inc. of Cupertino, California), and other similar devices. It should be noted that the processor 12 and other related items in FIG. 1 may be embodied wholly or in part as software, hardware, or both. Furthermore, the processor 12 and other related items in FIG. 1 may be a single contained processing module or may be incorporated wholly or partially within any of the other elements within the electronic device 10. The processor 12 may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that may perform calculations or other manipulations of information. The processors 12 may include one or more application processors, one or more baseband processors, or both, and perform the various functions described herein.

In the electronic device 10 of FIG. 1, the processor 12 may be operably coupled with a memory 14 and a nonvolatile storage 16 to perform various algorithms. Such programs or instructions executed by the processor 12 may be stored in any suitable article of manufacture that includes one or more tangible, computer-readable media. The tangible, computer-readable media may include the memory 14 and/or the nonvolatile storage 16, individually or collectively, to store the instructions or routines. The memory 14 and the nonvolatile storage 16 may include any suitable articles of manufacture for storing data and executable instructions, such as random-access memory, read-only memory, rewritable flash memory, hard drives, and optical discs. In addition, programs (e.g., an operating system) encoded on such a computer program product may also include instructions that may be executed by the processor 12 to enable the electronic device 10 to provide various functionalities.

In certain embodiments, the display 18 may facilitate users to view images generated on the electronic device 10. In some embodiments, the display 18 may include a touch screen, which may facilitate user interaction with a user interface of the electronic device 10. Furthermore, it should be appreciated that, in some embodiments, the display 18 may include one or more liquid crystal displays (LCDs), light-emitting diode (LED) displays, organic light-emitting diode (OLED) displays, active-matrix organic light-emitting diode (AMOLED) displays, or some combination of these and/or other display technologies.

The input structures 22 of the electronic device 10 may enable a user to interact with the electronic device 10 (e.g., pressing a button to increase or decrease a volume level). The I/O interface 24 may enable electronic device 10 to interface with various other electronic devices, as may the network interface 26. In some embodiments, the I/O interface 24 may include an I/O port for a hardwired connection for charging and/or content manipulation using a standard connector and protocol, such as the Lightning connector provided by Apple Inc. of Cupertino, California, a universal serial bus (USB), or other similar connector and protocol. The network interface 26 may include, for example, one or more interfaces for a personal area network (PAN), such as an ultra-wideband (UWB) or a BLUETOOTH^{®} network, a local area network (LAN) or wireless local area network (WLAN), such as a network employing one of the IEEE 802.11x family of protocols (e.g., WI-FI^{®}), and/or a wide area network (WAN), such as any standards related to the Third Generation Partnership Project (3GPP), including, for example, a 3^{rd} generation (3G) cellular network, universal mobile telecommunication system (UMTS), 4^{th} generation (4G) cellular network, long term evolution (LTE^{®}) cellular network, long term evolution license assisted access (LTE-LAA) cellular network, 5^{th} generation (5G) cellular network, and/or New Radio (NR) cellular network, a 6^{th} generation (6G) or greater than 6G cellular network, a satellite network, a non-terrestrial network, and so on. In particular, the network interface 26 may include, for example, one or more interfaces for using a cellular communication standard of the 5G specifications that include the millimeter wave (mmWave) frequency range (e.g., 24.25-300 gigahertz (GHz)) that defines and/or enables frequency ranges used for wireless communication. The network interface 26 of the electronic device 10 may allow communication over the aforementioned networks (e.g., 5G, Wi-Fi, LTE-LAA, and so forth).

The network interface 26 may also include one or more interfaces for, for example, broadband fixed wireless access networks (e.g., WIMAX^{®}), mobile broadband Wireless networks (mobile WIMAX^{®}), asynchronous digital subscriber lines (e.g., ADSL, VDSL), digital video broadcasting-terrestrial (DVB-T^{®}) network and its extension DVB Handheld (DVB-H^{®}) network, ultra-wideband (UWB) network, alternating current (AC) power lines, and so forth.

As illustrated, the network interface 26 may include a transceiver 30. In some embodiments, all or portions of the transceiver 30 may be disposed within the processor 12. The transceiver 30 may support transmission and receipt of various wireless signals via one or more antennas, and thus may include a transmitter and a receiver. The power source 29 of the electronic device 10 may include any suitable source of power, such as a rechargeable lithium polymer (Li-poly) battery and/or an alternating current (AC) power converter.

FIG. 2 is a functional diagram of the electronic device 10 of FIG. 1, according to embodiments of the present disclosure. As illustrated, the processor 12, the memory 14, the transceiver 30, a transmitter 52, a receiver 54, and/or antennas 55 (illustrated as 55A-55N, collectively referred to as an antenna 55) may be communicatively coupled directly or indirectly (e.g., through or via another component, a communication bus, a network) to one another to transmit and/or receive signals between one another.

The electronic device 10 may include the transmitter 52 and/or the receiver 54 that respectively enable transmission and reception of signals between the electronic device 10 and an external device via, for example, a network (e.g., including base stations or access points) or a direct connection. As illustrated, the transmitter 52 and the receiver 54 may be combined into the transceiver 30. The electronic device 10 may also have one or more antennas 55A-55N electrically coupled to the transceiver 30. The antennas 55A-55N may be configured in an omnidirectional or directional configuration, in a single-beam, dual-beam, or multi-beam arrangement, and so on. Each antenna 55 may be associated with one or more beams and various configurations. In some embodiments, multiple antennas of the antennas 55A-55N of an antenna group or module may be communicatively coupled to a respective transceiver 30 and each emit radio frequency signals that may constructively and/or destructively combine to form a beam. The electronic device 10 may include multiple transmitters, multiple receivers, multiple transceivers, and/or multiple antennas as suitable for various communication standards. In some embodiments, the transmitter 52 and the receiver 54 may transmit and receive information via other wired or wireline systems or means.

The electronic device 10 may also include one or more cameras or image or light sensors (e.g., as part of the input structures 22). The one or more cameras or image or light sensors (collectively referred to as "a camera 56" herein) may capture images or determine amounts of light (e.g., visible light, infrared light, ultraviolet light, and so on) surrounding the electronic device 10. In some embodiments, the camera 56 may include a front-facing camera (e.g., disposed on a display surface of the electronic device 10 having the display 18) and/or a rear-facing camera (e.g., disposed on a base or back surface, opposite the display surface, of the electronic device 10). In additional or alternative embodiments, the camera 56 may include any other suitable sensor that may be affected by noise caused by operation of an aggressor device or component (e.g., the transmitter 52).

The electronic device 10 may include facial identification (ID) circuitry 58 that receives one or more images captured by the camera 56, and determines whether the one or more images matches, corresponds to, or correlates to a face (e.g., in a database of faces). For example, the facial ID circuitry 58 may perform facial identification or recognition for authentication or security purposes, such as to unlock the electronic device 10 for a user. The facial ID circuitry 58 may include hardware elements, software elements, or both. In some embodiments, the facial ID circuitry 58 may be, at least in part, part of or coupled to the processor 12, include instructions or code stored in the memory 14 and/or the storage 16, and so on.

As illustrated, the various components of the electronic device 10 may be coupled together by a bus system 59. The bus system 59 may include a data bus, for example, as well as a power bus, a control signal bus, and a status signal bus, in addition to the data bus. The components of the electronic device 10 may be coupled together or accept or provide inputs to each other using some other mechanism.

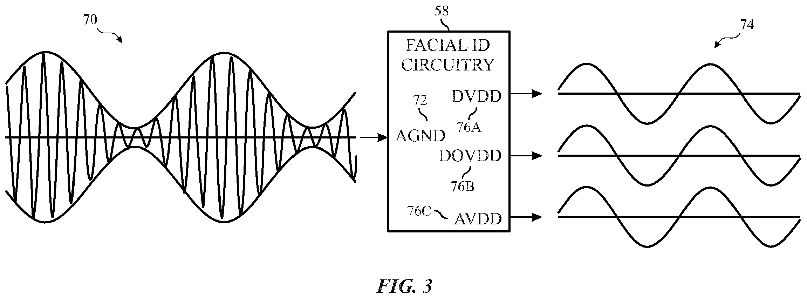

As noted above, when the transmitter 52 transmits wireless signals on certain radio frequency bands (such as LTE frequency bands, sub-6G frequency bands (e.g., less than 95 gigahertz (GHz) to 3 terahertz (THz) frequencies, sub-THz frequencies, and so on) via the antenna 55, the signals may couple to a sensor, such as the camera 56. The signals may manifest noise at the camera 56, and thus be captured as noise by the camera 56. FIG. 3 is a schematic diagram illustrating a modulated signal 70 emitted from an antenna 55 of the electronic device 10 coupling to the facial ID circuitry 58 of FIG. 2 at a ground connection 72 (e.g., an analog ground connection (AGND)). The modulated signal 70 may be generated by adding data to be transmitted to a carrier signal. In some embodiments, the modulated signal 70 may include a low frequency signal that results in low frequency noise 74 at an output by the facial ID circuitry 58. This may be because the camera 56 is sensitive to the low frequency noise 74. As illustrated, the noise 74 may be exhibited in one or more voltage supplies of the facial ID circuitry 58, such as a digital voltage supply (DVDD) 76A, a digital input/output voltage supply (DOVDD) 76B, an analog voltage supply (AVDD) 76C, and so on.

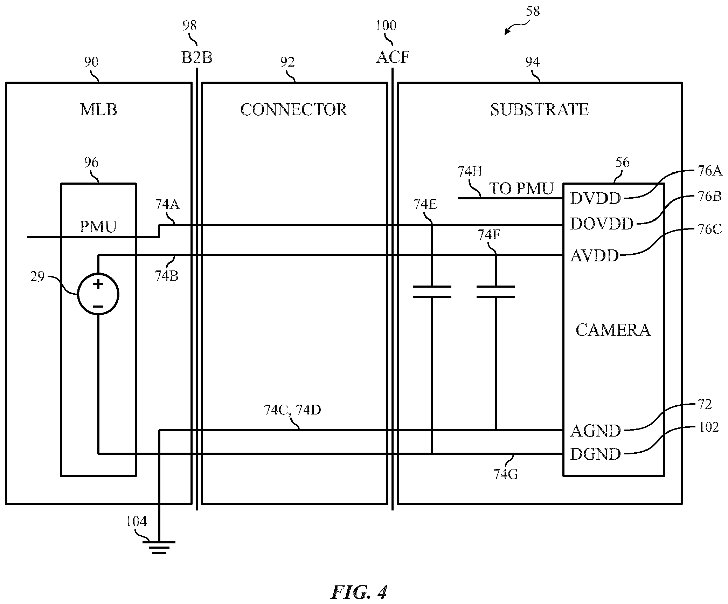

FIG. 4 is a schematic diagram illustrating how the noise 74 is injected into the camera 56 of the electronic device 10 from the facial ID circuitry 58. As illustrated, the facial ID circuitry 58 includes a main logic board (MLB) 90, a connector 92, and a substrate 94. The MLB 90 may include, among other things, processing circuitry (which may be part of or coupled to the processor 12), memory (which may be part of or coupled to the memory 14), controller circuitry that controls or operates the facial ID circuitry 58, and, as illustrated, a power management unit (PMU) or power management circuitry 96, that manages power usage in the facial ID circuitry 58. The PMU 96 may include a power source 29, which may supply power to the facial ID circuitry 58. The PMU 96 may be electrically coupled to the connector 92 via an interface, such a board-to-board (B2B) interface 98. The connector 92 may include any suitable device or component that electrically couples the PMU 96 to the substrate 94. In some embodiments, the connector 92 may be flexible to enable chip-to-chip (e.g., semiconductor die-to-semiconductor die) routing, including a flat flexible cable, flexible printed circuit, and so on. The connector 92 may be electrically coupled to the substrate 94 via an interface, such as an anisotropic conductive film (ACF) 100. The ACF 100 may include an adhesive interconnect system used to make electrical and/or mechanical connections between the connector 92 and the substrate 94. The substrate 94 may be part of a printed circuit board, to which the camera 56 is mounted or otherwise affixed. It should be understood that the connecting components, including the B2B interface 98, the connector 92, and/or the ACF 100 may include any suitable component or components that enable electrically coupling the PMU 96 to the substrate 94, as illustrated in FIG. 4.

As illustrated, the PMU 96 may provide the DOVDD 76B, the AVDD 76C, the AGND 72, and a ground connection (e.g., a digital ground connection (DGND)) 102 to the substrate 94 via the B2B interface 98, the connector 92, and the ACF 100. In some embodiments, the MLB 90 may provide the DOVDD 76B from a power supply external to the MLB 90, and provide the AGND 72 from a ground 104 external to the MLB 90. The MLB 90 may additionally or alternatively provide the AVDD 76C and/or the DGND 102 via an internal power source 29. The substrate 94 may also provide the DVDD 76A to the PMU 96.

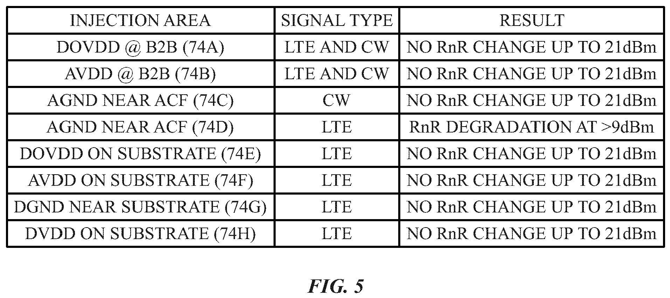

As noted above, when the transmitter 52 transmits wireless signals 70 on certain radio frequency bands (such as LTE frequency bands, sub-6G frequency bands (e.g., less than 95 gigahertz (GHz) to 3 terahertz (THz) frequencies, sub-THz frequencies, and so on) or certain types of wireless signals 70 via the antenna 55, the signals 70 may couple to the camera 56. The signals 70 may manifest noise at the camera 56, and thus be captured as noise 74 by the camera 56. FIG. 5 is a table of noise injection areas and results. As illustrated in the first row, when noise 74A of an LTE signal (e.g., a wireless signal that between 400 MHz and 6000 MHz, between 400 MHz and 2200 MHz, and so on) or a continuous waveform (CW) signal is injected in the DOVDD 76B at the B2B interface 98, there may be no resulting degradation or decrease of a ratio of pixel temporal noise to row temporal noise in a frame set (RnR) when the transmission power (e.g., power of the transmitter 52) of the signal 70 having the noise 74A is up to 21 decibel-milliwatts (dBm). An LTE signal may include a modulated signal (e.g., modulated via orthogonal frequency-division multiplexing (OFDM) having a frequency between 400 MHz and 6000 MHz, between 400 MHz and 2200 MHz, and so on. Because the LTE signal is modulated using, for example, OFDM, the LTE signal may not be characterized as continuous, as it does not have a constant amplitude or frequency throughout the signal. On the other hand, a CW signal may include an electromagnetic wave having a constant amplitude or frequency (such as a sine wave). As illustrated in the second row, when noise 74B of the LTE or CW signal is injected in the AVDD 76C at the B2B interface 98, there may be no resulting degradation or decrease of RnR when the transmission power of the signal 70 having the noise 74B is up to 21 dBm. As illustrated in the third row, when noise 74C of CW signal is injected in the AGND 72 at the ACF 100, there may be no resulting degradation or decrease of RnR when the transmission power of the signal 70 having the noise 74B is up to 21 dBm. However, as illustrated in the fourth row, when noise 74D of LTE signal is injected in the AGND 72 at the ACF 100, the noise 74D may result degrade or decrease RnR when the transmission power of the signal 70 is greater than 9 dBm. This may be because an electrostatic diode (ESD) structure on the ground connection 72 may rectify modulation (e.g., LTE modulation) of the transmitted signal 70 and fold or decrease it to or near 0 hertz (Hz), which may affect operation of the camera 56. As illustrated in the fifth row, when noise 74E of LTE signal is injected in the DOVDD 76B at the substrate 94, there may be no resulting degradation or decrease of RnR when the transmission power of the signal 70 having the noise 74E is up to 21 dBm. As illustrated in the sixth row, when noise 74F of LTE signal is injected in the AVDD 76C at the substrate 94, there may be no resulting degradation or decrease of RnR when the transmission power of the signal 70 having the noise 74F is up to 21 dBm. As illustrated in the seventh row, when noise 74G of LTE signal is injected in the DGND 102 at the substrate 94, there may be no resulting degradation or decrease of RnR when the transmission power of the signal 70 having the noise 74G is up to 21 dBm. As illustrated in the eighth row, when noise 74H of LTE signal is injected in the DVDD 76A at the substrate 94, there may be no resulting degradation or decrease of RnR when the transmission power of the signal 70 having the noise 74H is up to 21 dBm.

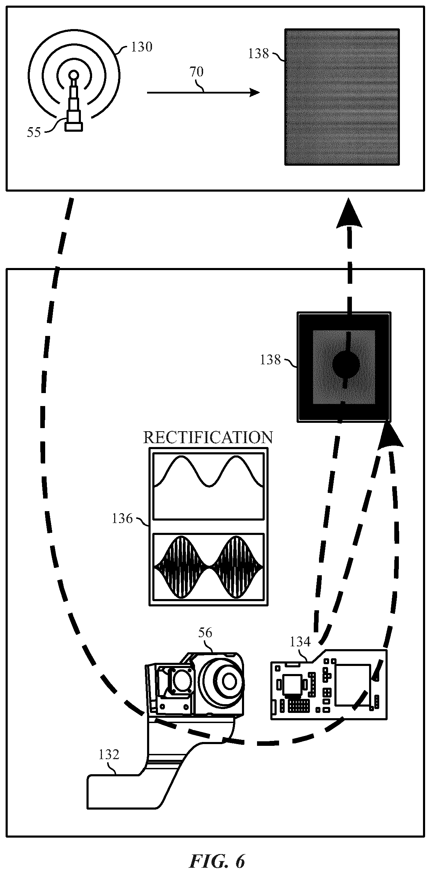

FIG. 6 is a schematic diagram of how the noise 74 is injected into the camera 56 of the electronic device 10. As illustrated, when the signal 70 (e.g., a GHz-signal) is transmitted 130 by the transmitter 52 via the antenna 55, because the antenna 55 is within a threshold range of the camera 56 (such that the signal 70 and/or the noise 74 in the signal 70 may affect the camera 56), the modulated radio frequency signal 70 may couple into flex traces 132 of or coupled to the camera 56 (e.g., of the connector 92 in FIG. 5). In some cases, the ESD structure 134 coupled to or of the ground connection 72 may rectify 136 and/or fold the GHz-signal 70 to sensor-susceptible frequencies (e.g., near or at 0 Hz), causing RnR degradation 138 at the camera 56. As such, the camera 56 receives the noise 74 in a captured, received, or sensed signal (e.g., used for facial identification). The ESD structure 134 may include one or more diodes used to absorb abnormal voltages and/or static electricity discharge to protect components of the electronic device 10. The noise 74 may manifest as row or horizontally-lined artifacts in images captured by the camera 56, referred to as "row noise."

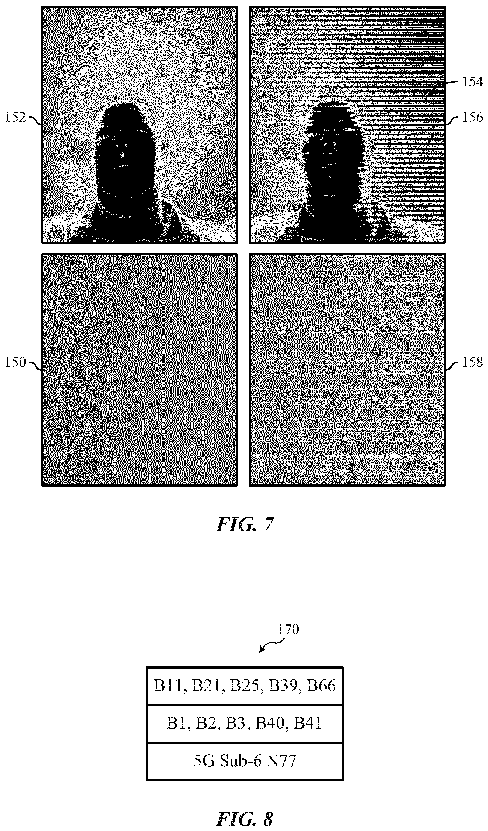

FIG. 7 illustrates unstructured pixel noise 150 that results in little to no row noise in a resulting image 152, and structured noise 74 from a transmitted signal 70 that, when combined with the unstructured pixel noise 150, results in row noise 154 in a resulting image 156. As shown, the image 152 captured by the camera 56 resulting from the unstructured pixel noise 150 is of good quality (e.g., there are no artifacts or errors due to noise). Thus, the image 152 captured by the camera 56 resulting from the unstructured pixel noise 150 may have a high RnR score. However, a combination 158 of the unstructured pixel noise 150 and the structured noise 74 may result in the image 156 captured by the camera 56 showing the row noise 154. That is, the combination 158 of the unstructured pixel noise 150 and the structured noise 74 may have a low RnR score. RnR may be defined as a ratio of unstructured vs. spatially structured noise in a numerical three-dimensional array, and may be an imaging metric formed by human psycho-visual analysis. In the application of facial identification scanning, the combination 158 of the unstructured pixel noise 150 and the structured noise 74 may lead to failures to unlock the electronic device 10, which may lead to a negative or unacceptable user experience.

While certain hardware mitigations may be implemented, such as a spring to a mid-chassis ground connection, a merged flex cable, foam on top of the facial ID circuitry 58, and so on, such mitigations may only help for some frequency bands, but not all that affect the camera 56. Instead, software or processor-controlled mitigation may be more effective to address the noise 74 for more or all frequency bands. In particular, the software or processor-controlled mitigation techniques may decrease transmission power (perform a power back-off procedure at the transmitter 52) or deactivate the antenna 55 (e.g., that is the aggressor, that creates the noise 74 at the camera 56). For example, the processor 12 may decrease or back-off the transmission power by a predetermined amount, such as less than 2 decibels (dB), 2 dB or more, 3 dB or more, between 2 dB and 3 dB (e.g., apply a -2 dB or -3 dB power back-off), and so on, when the camera 56 is being used (e.g., for facial identification purposes). In some embodiments, the processor 12 may decrease or back-off the transmission power by the predetermined amount for a predetermined time period (e.g., a duration that facial identification may be performed, such as 10 seconds or less, 5 seconds or less, 1 second or less, 0.5 seconds or less, and so on, such as 0.8 seconds).

Moreover, the processor 12 may decrease or back-off the transmission power when it determines that the transmitter 52 is transmitting signals of a frequency that causes the noise 74 at the camera 56. For example, the memory 14 and/or the storage 16 may store a data structure (e.g., a table, a list, and so on) that includes identifiers of frequency bands that, for signals having frequencies in those bands, cause the noise 74 at the camera 56. FIG. 8 is an example table 170 of frequency bands that, for signals having frequencies in those bands, cause the noise 74 at the camera 56. In some embodiments, these frequency bands may be determined at a testing, manufacturing, or production stage or facility of the electronic device 10. For example, the processor 12 may cause the transmitter 52 to iterate through transmitting signals having different frequencies, and determine whether those frequencies result in row noise 154 in a victim software application or circuitry, such as when performing facial identification. If so, those frequencies or frequency bands having those frequencies may be stored in the memory 14 and/or the storage 16.

As illustrated, the table 170 lists, in a first row, frequency bands B11 (a frequency division duplex (FDD) LTE 1500 MHz frequency band having an uplink frequency range of 1427.9-1452.9 MHz and a downlink frequency range of 1475.9-1500.9 MHz), B21 (an FDD LTE 1500 MHz frequency band having an uplink frequency range of 1447.9-1462.9 MHz and a downlink frequency range of 1495.9-1510.9 MHz), B25 (an FDD LTE 1900 MHz frequency band having an uplink frequency range of 1850-1915 MHz and a downlink frequency range of 1930-1995 MHz), B39 (a time division duplex (TDD) LTE 1900 MHz frequency band having an operating frequency range of 1880-1920 MHz), and B66 (an FDD LTE 1700 MHz frequency band having an uplink frequency range of 1710-1780 MHz and a downlink frequency range of 2110-2200 MHz). The table 170 also lists, in a second row, frequency bands B1 (an FDD LTE 2100 MHz frequency band having an uplink frequency range of 1920-1980 MHz and a downlink frequency range of 2110-2170 MHz), B2 (an FDD LTE 1900 MHz frequency band having an uplink frequency range of 1850-1910 MHz and a downlink frequency range of 1930-1990 MHz), B3 (an FDD LTE 1800 MHz frequency band having an uplink frequency range of 1710-1785 MHz and a downlink frequency range of 1805-1880 MHz), B40 (a TDD LTE 2300 MHz frequency band having an operating frequency range of 2300-2400 MHz), and B41 (a TDD LTE 2500 MHz frequency band having an operating frequency range of 2496-2690 MHz). The table 170 further lists, in a third row, frequency band 5G sub-6 GHz (Frequency Range 1) N77 (a TDD 5G NR 3700 MHz frequency band having an operating frequency range of 3300-4200 MHz).

As such, the processor 12 may decrease or back-off the transmission power when it determines that the transmitter 52 is transmitting signals of a frequency within a frequency band listed in the table 170 (which may result in producing the noise 74 at the camera 56). In additional or alternative embodiments, an algorithm or machine-learning technique may be used to determine the frequency bands that, for signals having frequencies in those bands, cause the noise 74 at the camera 56. It should be understood that the frequency bands in the table are merely examples, and that, in additional or alternative embodiments, different frequency bands and/or ranges may be included, and certain listed frequency bands may be removed.

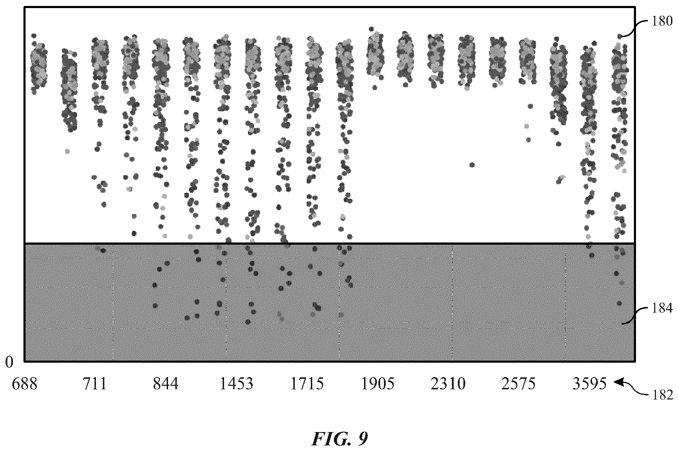

FIG. 9 is a frequency diagram illustrating RnR scores 180 over frequencies 182 from 688 MHz to 4 GHz. Signals 70 having frequencies that fall within a low RnR score region 184 may include noise 74 that causes the row noise 154 in a victim software application or circuitry, such as when executing a facial identification software application or the facial ID circuitry 58.

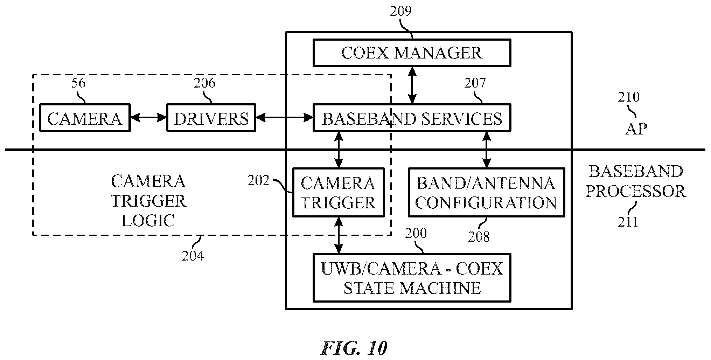

FIG. 10 is a software block diagram of software executing on the electronic device 10 (e.g., stored in the memory 14 and executed by the processor 12) that performs noise mitigation, according to embodiments of the present disclosure. In particular, a UWB/Camera Coexistence State Machine 200 may enable or disable antenna 55 blocking (e.g., deactivation) and/or perform a power back-off of the transmitter 52 based on receiving an indication of a camera trigger 202 from the camera 56 of the facial ID circuitry 58. The indication of the camera trigger 202 may correspond or correlate to the activation of the camera trigger 202 (e.g., by a user, a software application executing on the electronic device 10, and so on), such as if a facial ID software application is open and/or executing. The indication of the camera trigger 202 may be received and/or managed by camera trigger logic 204, which may be implemented in software, hardware, or both. In particular, the camera trigger logic 204 may include the camera 56, device drivers 206 enabling the processor 12 to interface with the camera 56, and baseband services 207. The baseband services 207 may include software that enables the processor 12 (e.g., a baseband processor) to manage radio functions, including those performed by the transceiver 30, the transmitter 52, and/or the receiver 54. As illustrated, the baseband services 207 may enable the processor 12 to interface with the camera 56 via the drivers 206, receive an indication of the camera trigger 202 (e.g., activation of the camera 56), and/or configure 208 frequency bands and/or the antenna 55. In particular, the baseband services 207 may enable the processor 12 to configure the transmitter 52, the receiver 54, and/or the antenna 55 to transmit or receive signals having target frequencies.

As illustrated, the top half of the software components, including the camera 56, the drivers 206, the baseband services 207, and a Coexistence Manager 209 that may configure the antenna 55 for the camera 56 may be executed by or part of an application processor 210 (which may be included as part of the processing circuitry 12), and the bottom half 190 of the software components, including the indication of the camera trigger 202, the UWB/Camera Coexistence State Machine 200, and the band/antenna configuration 208 may be executed by or part of a baseband processor 211 (which may also be included as part of the processing circuitry 12).

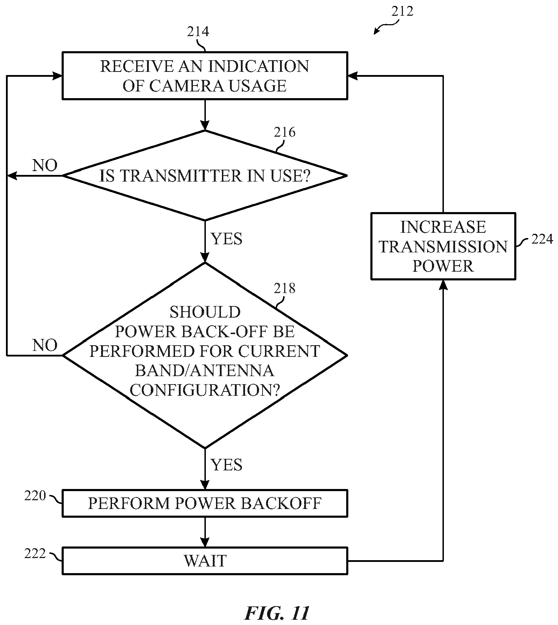

FIG. 11 is a flowchart of a method 212 for reducing noise cause by signal transmission when performing facial identification (or operating any other suitable victim software application or circuitry), according to embodiments of the present disclosure. Any suitable device (e.g., a controller) that may control components of the electronic device 10, such as the processor 12, the application processor 210, the baseband processor 211, and so on, may perform the method 212. In some embodiments, the method 212 may be implemented by executing instructions stored in a tangible, non-transitory, computer-readable medium, such as the memory 14 or storage 16, using the processor 12. For example, the method 212 may be performed at least in part by one or more of the software components shown in FIG. 10, including an operating system of the electronic device 10, one or more software applications of the electronic device 10, and the like. While the method 212 is described using steps in a specific sequence, it should be understood that the present disclosure contemplates that the described steps may be performed in different sequences than the sequence illustrated, and certain described steps may be skipped or not performed altogether.

In process block 214, the processor 12 receives an indication of usage of the camera 56 of the facial ID circuitry 58 (or any other suitable indication of usage associated with another victim software application or circuitry). For example, the processor 12 may receive an indication that the camera 56 is being used for facial identification, such as by receiving an indication of the camera trigger 202, execution of a facial ID software application, and so on.

In process block 216, the processor 12 determines if the transmitter 52 is in use or if an indication that the electronic device 10 is transmitting a radio frequency signal (e.g., 70) is received. In some embodiments, the processor 12 may determine if the transmitter 52 is transmitting the signal 70 using an antenna 55 that is within a threshold proximity of the camera 56 (e.g., such that the signal 70 may inject the noise 74 into a ground connection 72 of the camera 56). If not, the processor 12 returns to process block 214.

If the processor 12 determines that the transmitter 52 is in use or receives an indication that the electronic device 10 is transmitting a radio frequency signal (e.g., 70), then the processor 12, in process block 218, determines whether power back-off should be performed for a current band/antenna configuration. In particular, the processor 12 may receive or determine a frequency of the signal 70 being transmitted by the transmitter 52, and receive an indication of or determine whether the frequency of the signal 70 may cause the noise 74 at the camera 56. For example, the memory 14 and/or the storage 16 may store a data structure (e.g., a table, a list, and so on) listing frequency bands and/or antenna configurations for which, for signals having frequencies in those frequency bands and/or associate with those antenna configurations, cause the noise 74 at the camera 56. FIG. 8 is an example of such a data structure. While the example of FIG. 8 only shows frequency bands or ranges for which to perform a power back-off, the table 170 may be for a single antenna 55 or set of antennas 55, and another antenna 55 or set of antennas 55 may correspond to another table. As such, the processor 12, in some embodiments, may select a table based on the antenna 55 or antennas 55 that are transmitting the signal 70, and then determine whether the frequency band of that signal 70 is listed in the selected table. In any case, the processor 12 may determine whether the frequency of the signal 70 is within or correlates to a frequency band listed in the table (e.g., the processor 12 may compare the frequency of the signal 70 with frequency bands listed in the table).

If the frequency of the signal 70 is not within or does not correlate to a frequency band listed in the table, then in process block 218, then the processor 12 does not perform a power back-off (e.g., may maintain transmission power of the transmitter 52), and returns to process block 214. However, if the frequency of the signal 70 is within or does correlate to a frequency band listed in the table, then in process block 220, the processor 12 causes the transmitter 52 to perform a power back-off (e.g., reduce the transmission power to the transmitter 52). In some embodiments, the data structure or table 170 may include a power back-off amount (e.g., in dB) for which to perform the power back-off. For example, though not shown in the example table of FIG. 8, each frequency band listed in the table may be associated with a back-off amount (e.g., -2 dB, -3 dB, and so on). As such, the processor 12 causes the transmitter 52 to reduce its power by the amount corresponding to the frequency band associated with the transmission signal 70. In additional or alternative embodiments, the processor 12 may deactivate the transmitter 52, to cause the transmitter power to back-off to 0 dBm.

In process block 222, the processor 12 may wait before causing the transmitter 52 to return to its previous transmission power. A duration for the wait may be any suitable time period, though, in some embodiments, may correspond to operation of the camera 56 and/or the victim software application or circuitry. For example, the victim circuitry may include the facial ID circuitry 58. A threshold duration corresponding to perform facial identification may be 0.8 seconds or less, 1 second or less, 2 seconds or less, and so on. As such, the processor 12 may wait the threshold duration. After the threshold duration, the processor 12, in process block 224, causes the transmitter 52 to increase its transmission power (e.g., back to its previous transmission power before it applied the power back-off). In this manner, the method 212 may reduce noise cause by signal transmission when performing facial identification (or operating any other suitable victim software application or circuitry), resulting in less row noise in facial identification images, and a better user experience.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function] ... " or "step for [perform] ing [a function] ... ," it is intended that such elements are to be interpreted under 35 U.S.C. 112(f). However, for any claims containing elements designated in any other manner, it is intended that such elements are not to be interpreted under 35 U.S.C. 112(f).

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Exemplary embodiments of the present disclosure are set out in the following items:
1. An electronic device comprising:
   an antenna;
   a transmitter coupled to the antenna and configured to transmit a radio frequency signal via the antenna;
   a camera configured to capture an image; and
   processing circuitry coupled to the transmitter and the camera, the processing circuitry configured to reduce transmission power to the transmitter based on the camera capturing the image.
2. The electronic device of item 1, wherein the processing circuitry is configured to receive an indication that the transmitter is transmitting the radio frequency signal, and reduce the transmission power based on the camera capturing the image and the indication.
3. The electronic device of any of items 1-2, wherein the processing circuitry is configured to determine whether the radio frequency signal corresponds to causing noise in the image.
4. The electronic device of item 3, comprising a memory storing a plurality of frequency ranges that cause the noise in the image.
5. The electronic device of item 4, wherein the processing circuitry is configured to determine whether the radio frequency signal corresponds to causing the noise in the image based on comparing a frequency of the radio frequency signal to the plurality of frequency ranges.
6. The electronic device of item 5, wherein the processing circuitry is configured to reduce the transmission power based on a frequency of the radio frequency signal correlating with a frequency range of the plurality of frequency ranges.
7. The electronic device of any of items 5-6, wherein the processing circuitry is configured to maintain the transmission power based on a frequency of the radio frequency signal not correlating with a frequency range of the plurality of frequency ranges.
8. A method comprising:
   receiving, at processing circuitry of an electronic device, an indication that a sensor of the electronic device is being used; and
   reducing transmission power to a transmitter of the electronic device based on the indication.
9. The method of item 8, comprising receiving, at the processing circuitry, a second indication that the transmitter of the electronic device is transmitting a signal, wherein reducing the transmission power to the transmitter is based on the indication and the second indication.
10. The method of item 9, comprising determining that the signal corresponds to causing noise in a sensor signal received by the sensor.
11. The method of item 10, wherein the noise comprises row noise.
12. The method of any of items 9-11, comprising increasing the transmission power after reducing the transmission power.
13. The method of item 12, comprising waiting a threshold duration of time between reducing the transmission power and increasing the transmission power.
14. The method of item 13, wherein the threshold duration of time corresponds to operation of the sensor.
15. The method of any of items 13-14, wherein the threshold duration of time comprises one second or less.
16. The method of any of item 8-15, wherein the transmission power is reduced by a predetermined amount.
17. The method of item 16, comprising increasing the transmission power by the predetermined amount.
18. One or more tangible, non-transitory, computer-readable media, storing instructions that cause one or more processors to:
   receive a first indication that a sensor is being used for facial identification;
   receive a second indication that a transmitter is transmitting a signal at a transmission power; and
   reduce the transmission power based on the first indication and the second indication.
19. The one or more tangible, non-transitory, computer-readable media of item 18, wherein the instructions cause the one or more processors to reduce the transmission power by between two decibels and three decibels.
20. The one or more tangible, non-transitory, computer-readable media of any of items 18-19, wherein the instructions cause the one or more processors to reduce the transmission power to 0 decibel-milliwatts.

## Claims

1. An electronic device comprising:
an antenna;
a transmitter coupled to the antenna and configured to transmit a radio frequency signal via the antenna;
a camera configured to capture an image; and
processing circuitry coupled to the transmitter and the camera, the processing circuitry configured to reduce transmission power to the transmitter based on the camera capturing the image.

2. The electronic device of claim 1, wherein the processing circuitry is configured to receive an indication that the transmitter is transmitting the radio frequency signal, and reduce the transmission power based on the camera capturing the image and the indication.

3. The electronic device of any of claims 1-2, wherein the processing circuitry is configured to determine whether the radio frequency signal corresponds to causing noise in the image.

4. The electronic device of claim 3, comprising a memory storing a plurality of frequency ranges that cause the noise in the image.

5. The electronic device of claim 4, wherein the processing circuitry is configured to determine whether the radio frequency signal corresponds to causing the noise in the image based on comparing a frequency of the radio frequency signal to the plurality of frequency ranges.

6. The electronic device of claim 5, wherein the processing circuitry is configured to reduce the transmission power based on a frequency of the radio frequency signal correlating with a frequency range of the plurality of frequency ranges.

7. The electronic device of any of claims 5-6, wherein the processing circuitry is configured to maintain the transmission power based on a frequency of the radio frequency signal not correlating with a frequency range of the plurality of frequency ranges.

8. A method comprising:
receiving, at processing circuitry of an electronic device, an indication that a sensor of the electronic device is being used; and
reducing transmission power to a transmitter of the electronic device based on the indication.

9. The method of claim 8, comprising receiving, at the processing circuitry, a second indication that the transmitter of the electronic device is transmitting a signal, wherein reducing the transmission power to the transmitter is based on the indication and the second indication.

10. The method of claim 9, comprising determining that the signal corresponds to causing noise in a sensor signal received by the sensor.

11. The method of any of claims 9-10, comprising increasing the transmission power after reducing the transmission power.

12. The method of claim 11, comprising waiting a threshold duration of time between reducing the transmission power and increasing the transmission power.

13. The method of claim 12, wherein the threshold duration of time corresponds to operation of the sensor.

14. One or more tangible, non-transitory, computer-readable media, storing instructions that cause one or more processors to:
receive a first indication that a sensor is being used for facial identification;
receive a second indication that a transmitter is transmitting a signal at a transmission power; and
reduce the transmission power based on the first indication and the second indication.

15. The one or more tangible, non-transitory, computer-readable media of claim 14, wherein the instructions cause the one or more processors to reduce the transmission power by between two decibels and three decibels.
